Europäisches Patentamt

European Patent Office

Office européen des brevets

(11) Veröffentlichungsnummer: **0 502 315 A1**

# EUROPÄISCHE PATENTANMELDUNG

(21) Anmeldenummer: **92101589.7**

(51) Int. Cl.⁵: **F02M 45/06**, F02M 45/08

(22) Anmeldetag: **31.01.92**

(30) Priorität: **04.03.91 DE 4106813**

(43) Veröffentlichungstag der Anmeldung:
**09.09.92 Patentblatt 92/37**

(84) Benannte Vertragsstaaten:
**DE FR GB**

(71) Anmelder: **ROBERT BOSCH GMBH**
**Postfach 30 02 20**
**W-7000 Stuttgart 30(DE)**

(72) Erfinder: **Siebert, Hans-Joachim**

**Frankenstrasse 40**
**W-7141 Schwieberdingen(DE)**
Erfinder: **Grieshaber, Hermann, Dipl.-Ing (FH)**
**Haldenstrasse 69**
**W-7447 Aichtal-Aich(DE)**
Erfinder: **Egler, Walter, Dr. Dipl.-Ing.**
**Thaerstrasse 36**
**W-7000 Stuttgart 31(DE)**
Erfinder: **Meissner, Norbert, Dipl.-Ing**
**Höfinger Weg 3**
**W-7257 Ditzingen(DE)**

(54) **Kraftstoffeinspritzpumpe für Brennkraftmaschinen.**

(57) Es wird eine Kraftstoffeinspritzpumpe für Brennkraftmaschinen vorgeschlagen, bei der zur Erzielung eines besonders geräuscharmen Laufes einer Brennkraftmaschine, die mit Direkteinspritzung betrieben wird, die Kraftstofförderung in eine Voreinspritzung und eine Haupteinspritzung unterteilt wirdt, wobei diese Einspritzung durch einander überdeckende Ringnuten (25, 26) am Pumpenkolben und am Pumpenzylinder (3) und eine die einander überdeckenden Ringnuten mit einer Entlastungsöffnung (18) verbindenden Verbindungsnut (28) erzielt wird. Nach einem Teilhub im Überdeckungsbereich der Ringnuten miteinander wird die Verbindung zur Entlastungsöffnung (18) wieder unterbrochen. Die hier besonders klein haltbare Voreinspritzmenge bei kleinem Abstand zwischen Voreinspritzung und Haupteinspritzung wird in Verbindung mit einem Zweifederhaltereinspritzventil (12) auch bei unterschiedlichen Drehzahlen im hohen Maße konstant gehalten zur Erzielung einer optimalen Verbrennungsgeräuschminderung bei verschiedenen Drehzahlen der Brennkraftmaschine.

FIG.1

## Stand der Technik

Die Erfindung geht von einer Kraftstoffeinspritzpumpe für Brennkraftmaschinen nach der Gattung des Patentanspruchs 1 aus. Bei einer solchen, durch die GB-PS 893 621 bekannten Kraftstoffeinspritzpumpe mündet die Kraftstoffleitung in den Pumpenzylinder über eine Saugbohrung ein, die durch die Stirnseite des Pumpenkolbens in UT geöffnet wird und über die Kraftstoff vor Förderhubbeginn in den Pumpenarbeitsraum einfließen kann. Weiterhin zweigt vom Pumpenzylinder eine Auslaßöffnung ab, die durch die erste, wendelförmig verlaufende Steuerkante am Pumpenkolben zur Beendigung des wirksamen Pumpenkolbenförderhubs aufgesteuert wird. Die erste Steuerkante begrenzt dabei am Pumpenkolben eine dort angebrachte umfangsseitige Nut, die über eine Längsnut ständig in Verbindung mit dem Pumpenarbeitsraum ist. Zusätzlich ist in der Mantelfläche des Pumpenkolbens die sich in Umfangsrichtung erstreckende Ausnehmung vorgesehen, die in Überdeckung mit der im Mantel des Pumpenzylinders vorgesehenen Ausnehmung bringbar, die nach einem beginnenden Hub des Pumpenkolbens, nachdem seine Stirnkante die Einlaßöffnung verschlossen hat, noch in Verbindung mit der Auslaßöffnung, aber noch nicht in Verbindung mit der Ausnehmung in der Mantelfläche des Pumpenzylinders ist. Nach einem anfänglichen Förderhub kommt die Ausnehmung am Pumpenkolben in Verbindung mit der Ausnehmung in der Zylindermantelfläche bei gleichzeitiger Verbindung mit der Auslaßöffnung. Die Ausnehmung im Mantel des Pumpenzylinders ist zudem noch mit dem Pumpenarbeitsraum verbunden, wird jedoch nach einem Hub des Pumpenkolbens durch dessen Stirnkante verschlossen. In diesem Punkte ist die Ausnehmung am Pumpenkolben noch immer in Verbindung mit der Auslaßöffnung. Diese Ausgestaltung bewirkt, daß über den Teilhub des Pumpenkolbens, über den eine Verbindung zwischen Auslaßöffnung und Pumpenarbeitsraum über die Ausnehmung im Pumpenkolben und die Ausnehmung im Mantel des Pumpenzylinder hergestellt ist, die Kraftstoffeinspritzung unterbrochen wird und erst nach pumpenarbeitsraumseitigen Verschließen der Ausnehmung in dem Mantel des Pumpenzylinders die Kraftstoffeinspritzung fortgesetzt wird als Haupteinspritzung, bis durch die erste Steuerkante die Auslaßöffnung aufgesteuert wird.

Nach dem gleichartigen Prinzip arbeitende Kraftstoffeinspritzpumpen sind beispielsweise auch durch die DE-OS 38 09 700, die DE-OS 29 22 426 und die DE-OS 37 31 817 bekannt. Mit solchen Ausgestaltungen soll im Laufe des Förderhubs des Pumpenkolbens zunächst eine kleine Voreinspritzmenge in die Zylinder der Brennkraftmaschine eingespritzt werden und danach erst, nach einer Unterbrechung der Einspritzung, die Haupteinspritzmenge. Ziel der Ausgestaltungen ist es dabei, durch die gewählte Anordnung von Ausnehmungen eine sehr kurzzeitige Unterbrechung der Kraftstofförderung zu erzielen, die kleiner ist als wenn zum Beispiel durch eine mit dem Pumpenarbeitsraum ständige verbundene Quernut in der Mantelfläche des Pumpenkolbens im Anschluß an die die Förderung bestimmende Steuerkante eine übliche Entlastungsbohrung über ihren gesamten Durchmesser aufgesteuert würde. Die Voreinspritzung im kurzen Abstand vor der Haupteinspritzung wird benötigt, um das Geräuschverhalten von mit Direkteinspritzung betriebenen Brennkraftmaschinen zu reduzieren. In bekannter Weise entsteht während dem Zündverzug bei einer durchgehenden Einspritzung mit hoher Einspritzrate die Vorlagerung von größeren Mengen Kraftstoff, bevor die Entflammung beginnt. Die dann schlagartig verbrennende vorgelagerte Kraftstoffmenge erzeugt einen steilen Druckanstieg, der sich als Geräuschentwicklung bemerkbar macht. Um eine Schwarzrauchbildung bei der Verbrennung zu vermeiden bzw. zu verringern und den Kraftstoffverbrauch klein zu halten, muß eine richtige Abstufung der Voreinspritzmenge und des Abstands zwischen Vor- und Haupteinspritzung eingehalten werden. Die Bedingungen dazu ändern sich im Prinzip last- und drehzahlabhängig, doch würde eine variable Steuerung von Voreinspritzmenge und Voreinspritzabstand einen sehr erheblichen Aufwand bedeuten. Es ist deshalb Ziel, die Konstruktion von Kraftstoffeinspritzpumpen so zu gestalten, daß mit einer einzigen Einspritzausrüstung bei konstruktiv vorgegebener Kraftstoffvoreinspritzmenge und Abstand zwischen Voreinspritzung und Haupteinspritzung ein vertretbares Brennverhalten zu erhalten ist. Bei konstant bleibenden Überdeckungsabständen der Ausnehmungen gemäß Gattung des Patentanspruchs bzw. der anderen genannten Ausgestaltungen erhält man jedoch eine Drehzahlabhängigkeit durch drehzahlabhängige Vor- und Nachfördereffekte. Durch den Drosseleinfluß und die mit zunehmender Drehzahl zeitlich kürzer werdende Überdeckung nimmt die Voreinspritzmenge über der Drehzahl zu. Der Bedarf der Brennkraftmaschine für optimale Ergebnisse ist jedoch gerade umgekehrt.

## Vorteile der Erfindung

Durch die erfindungsgemäße Lösung gemäß den Merkmalen des Patentanspruchs 1 erhält man eine weitgehende Kompensation dieses obengenannten Mengenanstiegs über der Drehzahl. Durch die Verwendung des Kraftstoffeinspritzventils gemäß Kennzeichen wird die Einspritzrate während der Voreinspritzung im ersten Öffnungshub des Einspritzventils gedrosselt und somit der drehzahlabhängige Anstieg der Einspritzmenge reduziert. Die Drosselung in der ersten Öffnungsstufe des Einspritzventils wirkt sich mit zunehmender Drehzahl im Sinne einer Minderung der Kraftstoffeinspritzmenge aus, die gegenläufig zur drehzahlabhängigen Erhöhung der Kraftstofförderung für die Voreinspritzmenge bei der Kraftstoffeinspritzpumpe ist. Man erhält somit in vorteilhafter Weise im wesentlich besseren Maße eine konstante Voreinspritzmenge und somit ein verbessertes Verbrennungsergebnis nach Geräusch- und Emissionsverhalten und Kraftstoffverbrauch.

Durch die Unteransprüche sind vorteilhafte Weiterbildungen der erfindungsgemäßen Kraftstoffeinspritzpumpe gegeben. Durch die Ausgestaltung gemäß Anspruch 2 erfolgt ein schneller Verschluß der den Kraftstoff in den Pumpenarbeitsraum zuführenden Eintrittsöffnung mit sehr geringer Drosselphase, so daß sich der drehzahlabhängige Vorfördereffekt, d. h. der durch die Androsselung mit zunehmender Drehzahl nach früh verlegte Förderbeginn und die damit ansteigende Einspritzmenge weniger stark auswirkt.

Dadurch daß gemäß Anspruch 2 die Eintrittsöffnung zugleich auch als Entlastungsöffnung dient, wird die den Pumpenzylinder bildende Wand bzw. Büchse der Kraftstoffeinspritzpumpe weniger durch Öffnungen geschwächt. Durch die Ausgestaltung gemäß Anspruch 5 ergibt sich eine vorteilhafte Ausgestaltung der Kraftstoffeinspritzpumpe zur Erzeugung einer Voreinspritzung, wobei ein Minimum an Durchbrüchen in der Pumpenzylinderwand vorgesehen sind und in bezug auf Fertigung und Festigkeit günstige Gestaltung der die Einspritzunterbrechung steuernden Ausnehmungen vorgesehen ist. Durch die in Bereichen quer zur Achse des Pumpenkolbens verlaufende Begrenzungskante der Ausnehmung in der Wand des Pumpenzylinders ergeben sich aufgrund einer großen Öffnungsquerschnittszunahme pro Weg des Pumpenkolbens geringe drehzahlabhängige Drosseleinflüsse.

Zeichnung

Ein Ausführungsbeispiel der Erfindung ist in der Zeichnung dargestellt und wird in der nachfolgenden Beschreibung näher erläutert. Es zeigen Figur 1 die Teilansicht einer Kraftstoffeinspritzpumpe im Schnitt mit einem beispielhaften Kraftstoffeinspritzventil, Figur 2 eine Abwicklung der Pumpenkolbenmantelfläche überdeckt von der Mantelfläche des Pumpenzylinders mit den erfindungsgemäßen Querschnitten und Ausnehmungen und Figur 3 eine Darstellung des Öffnungsverlaufes beim Kraftstoffeinspritzventil nach Figur 1.

Beschreibung

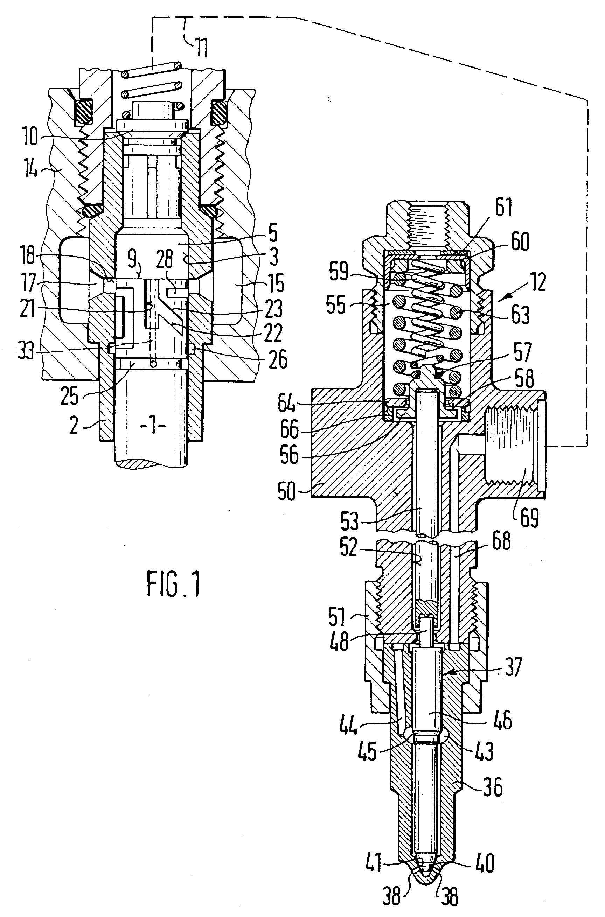

In Figur 1 ist ein Teil einer Reiheneinspritzpumpe im Schnitt dargestellt mit einem der Pumpenkolben 1, der in einer Zylinderbüchse 2, die einen Pumpenzylinder 3 bilden, angeordnet ist. Der Pumpenkolben wird durch einen Nockenantrieb in bekannter Weise hin- hergehend angetrieben und schließt mit seiner Stirnseite 9 in dem Pumpenzylinder 3 einen Pumpenarbeitsraum 5 ein. Dieser wird auf der der Stirnseite des Pumpenkolbens gegenüberliegenden Seite durch ein bekanntes Druckventil 10 begrenzt, über das beim Förderhub des Pumpenkolbens Kraftstoff aus dem Pumpenarbeitsraum 5 in eine sich stromabwärts des Druckventils anschließende und zu einem Kraftstoffeinspritzventil 12 führende Einspritzleitung fördert. Die Zylinderbüchse 2 ist in ein Gehäuse 14 der Kraftstoffeinspritzpumpe dicht eingesetzt und wird von einem im Gehäuse angeordneten Saugraum 15 umgeben, der von einer nicht weiter gezeigten Kraftstoffvorförderpumpe mit Kraftstoff in üblicher Weise aus einem Kraftstoffvorratsbehälter versorgt wird. Der Saugraum dient sowohl der Kraftstoffversorgung als auch als Entlastungsraum für abzusteuernden Kraftstoff aus dem Pumpenarbeitsraum. Dazu weist die Zylinderbüchse eine Durchgangsbohrung 17 auf, die als Kraftstoffleitung zwischen Pumpenarbeitsraum und Saugraum dient mit einer pumpenzylinderseitigen Eintrittsöffnung 18, die zugleich Entlastungsöffnung ist.

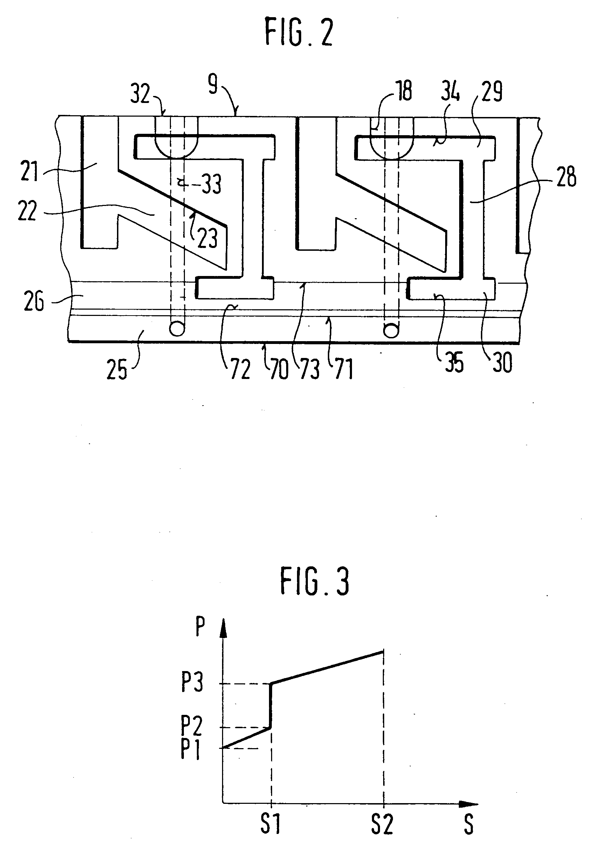

Der Pumpenkolben weist auf seiner Mantelfläche in an sich bekannter Weise eine Längsnut 21 auf, die sich in eine schräg zur Antriebsseite des Pumpenkolbens hin verzweigende Schrägnut 22 aufteilt, die eine erste zum Pumpenarbeitsraum hin weisende Steuerkante 23 nach oben begrenzt. Die Längsnut und Schrägnut können auch in zweifacher Ausfertigung, also sich punktsymmetrisch gegenüberliegend vorgesehen werden, wie das auch in Figur 2 gezeigt ist. Mit diesen Nuten arbeitet die Kraftstoffeinspritzpumpe in der konventionellen Weise derart, daß am Ende des Saughubs des Pumpenkolbens in seiner untersten Stellung die Eintrittsöffnung 18 freigegeben ist und somit der Pumpenarbeitsraum 5 mit Kraftstoff gefüllt werden kann. Beim nachfolgenden Hub des Pumpenkolbens verschließt die Stirnseite 9 nach einem anfänglichen Hub die Eintrittsöffnung 18 und es erfolgt ein Druckaufbau bis zum Einspritzdruck in dem Pumpenarbeitsraum. Ab diesem Verschließen fördert der Pumpenkolben mit Einspritzdruck Kraftstoff zum Einspritzventil und von diesem in den Brennraum. Diese Hochdruckförderung wird dann unterbrochen, wenn entsprechend einer Drehstellung der Pumpenkolbens, der in bekannter Weise durch eine Verdreheinrichtung verdreht werden kann, die erste Steuerkante 23 die Eintrittsöffnung 18, die jetzt als Entlastungsöffnung dient, aufsteuert, so daß Kraftstoff aus dem Pumpenarbeitsraum über die Längsnut 21 und die Schrägnut 22 zum Pumpensaugraum 15 abströmen kann. Damit wird der Pumpenarbeitsraum so entlastet, daß die Kraftstoffeinspritzung unterbrochen wird. Die restliche vom Pumpenkolben weiterhin geförderte Kraftstoffeinspritzmenge fließt so dann zum Saugraum hin ab. Die Breite der Schrägnut ist dabei so ausgelegt, daß die Verbindung zum Saugraum bis zum oberen Totpunkt des Pumpenkolbens bestehen bleibt. Je weiter der Pumpenkolben in der Figur gesehen nach rechts verdreht wird, desto geringer ist der einspritzwirksame Pumpenkolbenförderhub und somit die einspritzbare Kraftstoffmenge.

In weiterer Ausgestaltung ist nun am Pumpenkolben eine Ausnehmung in Form einer Ringnut 25 mit zueinander parallelen Begrenzungskanten 70 und 71 und in der Wand des Pumpenzylinders 3 eine Ausnehmung in Form einer Ringnut 26 mit zueinander parallelen Begrenzungskanten 72 und 73 vorgesehen. Weiterhin ist auf der Mantelfläche des Pumpenkolbens eine U-förmige Verbindungsnut eingearbeitet, die in der Abwicklung in Figur 2 besser erkennbar ist. Diese Nut umfaßt mit ihren Schenkeln 29 und 30 die Schrägnut 22. Die Begrenzungskanten 34 und 35 dieser Schenkel liegen zueinander parallel und parallel zu den in einer Radialebene des Pumpenkolbens liegenden Begrenzungskanten der Ringnut 25 und 26. Weiterhin ist der Figur 2 zu entnehmen, daß die Eintrittsöffnung bzw. Entlastungsöffnung 18 eine gradlinige, zur Stirnseite 9 des Pumpenkolbens und der Begrenzungskanten 34 parallele obere Begrenzungskante 32 aufweist und die Ringnut 25 in der Mantelfläche des Pumpenkolbens über einen von der Stirnseite des Pumpenkolbens ausgehenden, in dem Pumpenkolben verlaufenden Kanal 33 in ständiger Verbindung mit dem Pumpenarbeitsraum ist.

In der in Figur 2 gezeigten Stellung hat der Pumpenkolben entsprechend seiner Stellung auch in Figur 1 die Entlastungsöffnung 18 gerade verschlossen. Da die Entlastungsöffnung 18 ferner auch nicht mit der Längsnut 21 in Verbindung steht, was beim Abstellen der Brennkraftmaschine durch Drehung des Pumpenkolbens vorgenommen wird, wird durch die Pumpenkolbenbewegung im Pumpenarbeitsraum Hochdruck erzeugt und es erfolgt eine Einspritzung. Dabei bewegt sich sowohl die Ringnut 25 als auch die Verbindungsnut 28 nach oben und nach einem anfänglichen Einspritzhub kommt die Ringnut 25 mit der Ringnut 26 in Überdeckung, so daß auch die Ringnut 26 über den Kanal 33 mit dem Pumpenarbeitsraum in Verbindung steht. In diesem Augenblick ist ferner auch noch der untere Schenkel 30 der Verbindungsnut in Überdeckung mit der Ringnut 26 und ebenfalls der obere Schenkel 29 in Überdeckung mit der Entlastungsöffnung 18. Somit wird mit der Überdeckung von Ringnut 25 und 26 eine Verbindung zwischen Pumpenarbeitsraum und Entlastungsöffnung hergestellt, so daß der Pumpenarbeitsraum entlastet und die Kraftstoffeinspritzung unterbrochen wird. Dies geschieht solange, bis der untere Schenkel 30 der Verbindungsnut beim weiteren Hub des Pumpenkolbes aus der Überdeckung mit der Ringnut 26 in der Wand des Pumpenzylinders kommt. Dann kann sich wiederum Kraftstoffdruck im Pumpenarbeitsraum aufbauen und es wird in der Folge die Haupteinspritzung durchgeführt, bis die erste Steuerkante 23 der Schrägnut 22 in Überdeckung mit der Entlastungsöffnung 18 kommt. Hier erfolgt je nach Drehstellung zu einem früheren oder späteren Pumpenkolbenhub die endgültige Beendigung des einspritzwirksamen Pumpenkolbenförderhubs, da der Pumpenarbeitsraum über die Längsnut 21 und die Schrägnut 22 zum Saugraum 15 hin entlastet wird.

Diese Lösung hat den Vorteil, daß große Überströmquerschnitte bei relativ kleinem Hub erzielt werden durch die zueinander parallelen, in Umfangsrichtung verlaufenden Begrenzungskanten von Ringnut und den Schenkeln 29 und 30 der Verbindungsnut 28 sowie der oberen Begrenzungskante 32 der Entlastungsöffnung 18. Somit sind auch die drehzahlabhängigen Drosselungen am Übertritt der Querschnitte zueinander bzw. die drehzahlabängigen Vorfördereffekte kleingehalten.

Der von dem Pumpenkolben geförderte Kraftstoff gelangt über die Einspritzleitung 11 zum Einspritzventil 12. Dieses ist nun abweichend von den üblicherweise verwendeten Ventilen ein Einspritzventil mit einem sogenannten Zwei-Feder-Halter. Dieses besteht zunächst einmal in üblicher Weise aus einem Ventilkörper 36, in den eine Ventilnadel 37 eingepaßt ist und der Kraftstoffaustrittsöffnungen in Form von Einspritzbohrungen 38 an seiner Stirnseite aufweist, die durch die Ventilnadel 38 gesteuert werden.

Dazu weist die Ventilnadel eine kegelförmige Spitze 40 auf, die mit ihrer Mantelfläche als Dichtfläche mit einem entsprechend kegelförmig ausgebildeten Ventilsitz 41 zusammenwirkt. Von dem Ventilsitz führen die Einspritzbohrungen 38 ab, die entsprechend den Erfordernissen des Brennraumes der Brennkraftmaschine, bei der das Einspritzventil zum Einsatz kommt, gestaltet und ausgerichtet sind. Vorzugsweise haben die Bohrungen den gleichen Durchmesser. Stromaufwärts des Ventilsitzes ist üblicherweise ein Druckraum 43 vorgesehen, in den ein Kanal 44, der etwa parallel zu einem im Druckraum 43 eine Druckschulter 45 bildenden Schaft 46 der Ventilnadel verläuft, mündet. Der Schaft ist im Ventilkörper dicht geführt und ragt mit einem Druckzapfen 48 aus dem Ventilkörper auf der der Einspritzöffnung 38 gegenüberliegenden Stirnseite heraus. Mit dieser Stirnseite ist der Ventilkörper fest und dicht mit dem Körper 50 eines Federhalters mittels einer Überwurfmutter 51 verbunden. Dieser Körper weist eine Längsbohrung 52 auf, in die der Druckzapfen 48 ragt und dort mit einer Druckstange 52 gekoppelt ist, die durch die Längsbohrung 52 hindurch in einem im Körper 50 angeordneten Federraum 55 führt. Auf das dort hineinragende Ende der Druckstange ist ein Federteller 56 aufgesetzt, der eine erste Schulter 57 mit kleinem Durchmesser und eine sich in Richtung Ventilkörper anschließende zweite Schulter 58 mit größerem Durchmesser aufweist. Auf der ersten Schulter stützt sich ein erste Druckfeder 59 ab, die ein Gegenlager 60 an der gegenüberliegenden Stirnseite 61 des Federraums 55 hat. An dieser Stirnseite stützt sich ferner eine zweite Druckfeder 63 ab, die die erste Druckfeder koaxial umfaßt und an ihrem anderen Ende auf einer Lochscheibe 64 aufliegt, die sich wiederum ventilkörperseitig an einem festen Anschlag 66 abstützt. Dieser Anschlag kann zum Beispiel als Ring ausgebildet sein, der in den zylindrischen Federraum eingelegt sein und an der ventilkörperseitigen Stirnseite des Federraumes zur Anlage kommen kann. Die Lochscheibe 62 weist einen Hubabstand zur zweiten Schulter 58 auf, wenn sich die Ventilnadel in Schließstellung mit auf dem Ventilsitz 12 aufliegender Dichtfläche befindet und dient als Anschlag für diese Schulter.

Der Kanal 44 im Ventilkörper setzt sich über einen Kanal 68 im Körper 50 des Düsenhalters fort. Dieser Kanal verläuft dabei parallel zur Längsbohrun 52 und mündet an einem Anschlußstück 69, an dem die Einspritzleitung 11 angeschlossen. ist.

Die Feder und die Dimensionierung der Ventilnadel mit Druckschulter 45 ist so ausgelegt, daß die Ventilnadel mit Förderbeginn zunächst um einen geringen Teilhub angehoben wird, bis die zweite Schulter 58 in Anlage an dem durch die Lochscheibe 64 gebildeten Anschlag kommt. Dieser Hub ist in Figur 3 mit s gekennzeichnet mit einem Druckanstieg von P1 auf P2. Da die Lochscheibe unter Vorspannung am festen Anschlag 66 anliegt, muß sich der Druck im Druckraum 45 von P2 auf P3 erhöhen, bevor die Ventilnadel einen weiteren Hub durchführen kann entgegen der Kraft der zweiten Druckfeder 63. In der ersten Hubstufe entlang der Linie von P1 bis P2 bzw. den Hubweg S werden die Einspritzbohrung 38 zwar von der Dichtfläche der Ventilnadel freigegeben doch bleibt der Abstand der Dichtfläche vom Ventilsitz 41 so gering, daß der ringförmige Eintrittsquerschnitt zu den Durchmessern der Einspritzbohrungen kleiner ist als der Einspritzbohrungsdurchmesser. Es bildet sich somit eine gedrosselte Verbindung zu den Einspritzbohrungen 38 , so daß auch die Einspritzung gedrosselt erfolgt. Diese Einspritzung mit verminderter, gedrosselter Einspritzrate bleibt bestehen, bis der Druck P3 erreicht ist und sich das Einspritzventil weiter öffnet. Je nach Auslegung der Weichheit der Druckfedern kann die Steilheit des Anstiegs zwischen P1 und P2 und P3 bis ganz geöffnet unterschiedlich sein. Hierbei kann man die Einspritzrate den Verhältnissen der Brennkraftmaschine anpassen.

Dieses Einspritzventil hat den Vorteil, daß bei kleinem Ventilnadelhub nicht die volle vom Pumpenkolben geförderte Kraftstoffeinspritzmenge entsprechend der hier vorgegebenen Förderrate sogleich zur Einspritzung gelangt, sondern daß die Einspritzung über die gedrosselten Einspritzöffnungen verzögert erfolgt mit kleiner Einspritzrate. Durch Glättung der Kraftstofförderung bei Förderbeginn kann somit auch die Einspritzdauer verlängert werden. In Verbindung mit der oben beschriebenen Kraftstoffeinspritzpumpe wird hier die von der Pumpe geförderte Voreinspritzmenge optimal geglättet und die Einspritzrate reduziert. Dabei können drehzahlabhängige Vorfördereffekte, die zu einer Erhöhung der Voreinspritzmenge mit zunehmender Drehzahl führen würden, ausgeglichen werden, da die Drosselung im Einspritzventil in Verbindung mit der bei steigender Drehzahl geringer zu verfügenden Zeit in diesem Sinne kompensierend wirkt und die mehr geförderte Kraftstoffeinspritzmenge auf die Haupteinspritzung verlangert, die mit weiterem Hub in der Ventilnadel gegen die zweite Druckfeder beginnt bzw. durch die zweite Förderstufe des Pumpenkolbens nach Unterbrechung der Förderung ausgelöst wird.

Statt dem hier beschriebenen Einspritzventil können bei bestimmten Bedarf auch andere Formen von Einspritzventilen, wie zum Beispiel Sacklocheinspritzventile verwendet werden, in Verbindung mit einem hier beschriebenen Zweifederhalter mit den Druckfedern 59 und 63. Bei Anwendungen für nicht direkt in den Hauptbrennraum einspritzenden Einspritzeinrichtungen der vorstehenden Art kann dann bei Einspritzung in Vorkammern oder Wirbelkammer statt den zuvor beschriebenen Sitzlocheinspritzventil mit zweistufiger Öffnung auch ein Drosselzapfeneinspritzventil verwendet werden. Die vorgenannte Lösung mit vom Ventilsitz abgehenden Einspritzöffnungen hat den besonderen Vorteil, daß mit Beendigung des Einspritzvorganges kein Kraftstoff mehr in den Brennraum nachtropfen kann, was die Kohlenwasserstoffemission der Brennkraftmaschine vermindert.

Im Zusammenwirken von der eingangs beschriebenen Kraftstoffeinspritzpumpe mit dem oben beschriebenen Ventil ergeben sich die eingangs genannten besonderen vorteilhaften Wirkungen.

**Patentansprüche**

1.  Kraftstoffeinspritzpumpe für Brennkraftmaschinen mit mindestens einem Pumpenkolben (1), der in einem Pumpenzylinder (3) durch einen Nockenantrieb hin- und hergehend zur Durchführung von Saug- und Pumphüben angetrieben wird und der mit seiner Stirnseite (9) einen Pumpenarbeitsraum (5) einschließt, in den über eine in den Pumpenzylinder mündende Kraftstoffleitung (17) gesteuert bei Saughub des Pumpenkolbens Kraftstoff angesaugt wird und aus dem beim Förderhub des Pumpenkolben Kraftstoff über eine Druckleitung zur Einspritzung zu Einspritzventilen (12) gefördert wird und mit am Pumpenkolben vorgesehenen Steuerkanten, über deren eine erste Steuerkante (23) beim Förderhub des Pumpenkolben ab einem durch die Drehstellung des Pumpenkolben änderbaren Förderhub des Pumpenkolben der Pumpenarbeitsraum (5) mit einer Entlastungsöffnung (28) in der Wand des Pumpenzylinders (3) verbindbar ist und mit einer Ausnehmung (25) am Mantel des Pumpenkolbens (1) mit sich quer zur Achse des Pumpenkolbens erstreckenden Begrenzungskante und einer Ausnehmung (26) in der Wand des Pumpenzylinders mit wenigstens einer sich vorzugsweise ebenfalls quer zur Achse des Pumpenzylinders erstreckenden Begrenzungskante, welche Ausnehmungen (25,26) über einen Teil des Förderhubes des Pumpenkolbens in Überdeckung miteinander sind und über wenigstens einen Teil der Überdeckung nach einem Teil des Förderhubes des Pumpenkolbens über eine mit dem Pumpenkolben bewegte Steuerkante(30) zugleich mit dem Pumpenarbeitsraum (5) und einer Entlastungsleitung (17) verbunden sind, dadurch gekennzeichnet daß das Einspritzventil (12) eine wenigstens eine Austrittsöffnung steuernde Ventilnadel (37) aufweist, die in Schließrichtung durch den Kraftstoffdruck entgegen der Kraft einer ersten Ventilfeder (59) an einen beweglichen Anschlag (64) bringbar ist, der durch eine zweite Ventilfeder (63) belastet und bei weiter ansteigendem Kraftstoffdruck von einem festen Anschlag (66) abhebbar ist, wobei in einer Öffnungsstellung der Ventilnadel (37) am in Anlage am festen Anschlag befindlichen bewegbaren Anschlag (64) der den Kraftstoffaustritt bestimmende Querschnitt der wenigstens eine Austrittsöffnung des Einspritzventils gegenüber dem bei ganz geöffnetem Einspritzventil bei vom festen Anschlag abgehobenen beweglichen Anschlag (64) im Sinne einer Drosselung der Kraftstoffeinspritzung reduziert ist.

2. Kraftstoffeinspritzpumpe nach Anspruch 1, dadurch gekennzeichnet, daß die Einmündung der Kraftstoffeinspritzleitung in den Pumpenzylinder über wenigstens eine Eintrittsöffnung (18) erfolgt, die pumpenarbeitsraumseitig eine sich parallel zu einer stirnseitigen Steuerkante (9) am Pumpenkolben erstreckende Begrenzungskante (32) aufweist, die durch die stirnseitige Steuerkante (9) beim Beginn der Hochdruckförderung des Pumpenkolbens überfahren wird.

3. Kraftstoffeinspritzpumpe nach Anspruch 2, dadurch gekennzeichnet, daß die Eintrittsöffnung (18) der Kraftstoffleitung zugleich als Entlastungsöffnung dient, die mit einer schräg zur Achse des Pumpenkolbens verlaufenden Steuerkante (23) zusammenarbeitet.

4. Kraftstoffeinspritzpumpe nach Anspruch 3, dadurch gekennzeichnet, daß die Kraftstoffleitung (17) mit ihrer Eintrittsöffnung (18) als Entlastungsleitung dient, mit der die Ausnehmungen (25,26) bei Überdeckung nach einem Teil des Förderhubes des Pumpenkolbens, gesteuert durch die mit dem Pumpenkolben bewegten Steuerkante (30), verbunden sind.

5. Kraftstoffeinspritzpumpe nach einem der vorstehenden Ansprüche, dadurch gekennzeichnet, daß als Ausnehmungen am Pumpenkolben und in der Wand des Pumpenzylinders Ringnuten (25,26) vorgesehen sind, wobei die Ringnut (25) im Pumpenkolben über einen im Pumpenkolben verlaufenden Kanal (33) ständig mit dem Pumpenarbeitsraum (5) verbunden ist, im Laufe des Pumpenkolbenhubes mit der Ringnut (26) in der Wand des Pumpenzylinders (3) in Überdeckung kommt und die Ringnut (26) im Pumpenzylinder über eine im Pumpenkolben verlaufende Verbindungsnut (28), die pumpenarbeitsraumseitig quer zur Achse des Pumpenkolbens verlaufende Begrenzungskanten aufweist, mit einer der Eintrittsöffnungen verbindbar ist.

6. Kraftstoffeinspritzpumpe nach Anspruch 5, dadurch gekennzeichnet, daß die Verbindungsnut (28) zur Seite der in der Wand des Pumpenzylinders (3) angeordneten Ringnut (26) ebenfalls Begrenzungskanten aufweist, die quer zur Achse des Pumpenkolben verlaufen.

FIG.1

# FIG. 2

# FIG. 3

Europäisches
Patentamt

**EUROPÄISCHER RECHERCHENBERICHT**

Nummer der Anmeldung

EP    92 10 1589

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 731 817 (MOTORENFABRIK HATZ) <br> * Spalte 4, Zeile 46 - Spalte 6, Zeile 14; Abbildungen 1-4 * <br> --- | 1-5 | F02M45/06 <br> F02M45/08 |
| A | CH-A-350 835 (FRIEDMANN & MAIER) <br> * Seite 2, Zeile 75 - Seite 3, Zeile 50; Abbildungen 1-3 * <br> --- | 1 | |
| A | GB-A-2 230 561 (DAIMLER-BENZ) <br> --- | | |
| A | US-A-3 435 811 (GUERTLER) <br> --- | | |
| D,A | DE-A-3 809 700 (MOTORENFABRIK HATZ) <br> <br> ----- | | |

RECHERCHIERTE SACHGEBIETE (Int. Cl.5)

F02M

Der vorliegende Recherchenbericht wurde für alle Patentansprüche erstellt

| Recherchenort | Abschlußdatum der Recherche | Prüfer |
|---|---|---|
| DEN HAAG | 12 MAI 1992 | SIDERIS MARIOS |